# FASCICULE DE BREVET EUROPEEN

(11) **EP 3 655 271 B1**
(45) Date de publication et mention de la délivrance du brevet: **13.09.2023**
(21) Numéro de dépôt: 18762360.8
(22) Date de dépôt: 19.07.2018
(51) Int. Cl.: B60J 10/78, B60J 10/76, B60R 13/04

(54) **VITRAGE À RAINURE DE COULISSEMENT ET PROCÉDÉ DE FABRICATION DU VITRAGE**
VERGLASUNGSEINHEIT MIT SCHIEBERILLE UND VERFAHREN ZUR HERSTELLUNG DER VERGLASUNGSEINHEIT
GLAZING UNIT WITH SLIDING GROOVE AND METHOD FOR PRODUCING THE GLAZING UNIT

(30) Priorité: 19.07.2017 FR 1756845
(43) Date de publication de la demande: 27.05.2020
(73) Titulaire: SAINT-GOBAIN GLASS FRANCE, 92400 Courbevoie (FR)
(72) Inventeur: DASSONVILLE, Camille, 60200 Compiegne (FR); CLASSEAU, Maxime, 80170 Fouquescourt (FR)
(74) Mandataire: Saint-Gobain Recherche
(86) Numéro de dépôt international: PCT/FR2018/051846
(87) Numéro de publication internationale: WO 2019/016480

(56) Documents cités:
- EP-A1- 0 983 891
- EP-A1- 2 463 134
- EP-A1- 2 614 977
- EP-B1- 0 983 891
- EP-B1- 2 463 134
- EP-B1- 2 614 977
- FR-A1- 3 002 882
- JP-A- 2007 276 686

## Description

La présente invention concerne un vitrage comprenant un élément vitré, fixe, et comprenant le long d'un bord latéral dudit élément vitré un montant qui s'étend plus loin latéralement que ledit bord latéral, ledit montant comportant une rainure de coulissement présentant en coupe transversale une forme de U, pour le coulissement d'un élément vitré mobile et comportant :
- d'une part un cordon profilé présentant :
   - une base qui est située contiguë à un chant dudit élément vitré, et
   - une aile intérieure qui s'étend sensiblement perpendiculairement à ladite base et à l'opposé dudit élément vitré, et
- ledit cordon profilé comportant une pièce intermédiaire de renfort présentant :
   - d'une part un corps qui est situé en vis-à-vis dudit chant de l'élément vitré avec ladite base intercalée entre ledit corps et ledit chant,
   - et d'autre part une branche intérieure qui s'étend sensiblement perpendiculairement audit corps et parallèlement à ladite aile intérieure,
- d'autre part une pièce de couverture comportant une semelle de couverture s'étendant sensiblement perpendiculairement à ladite base et plus à l'extérieur que ladite base.

Ladite pièce de couverture est attachée mécaniquement audit montant pour réaliser ladite rainure de coulissement.

La présente invention concerne également un procédé de fabrication du vitrage correspondant.

Les deux éléments vitrés sont destinés à être positionnés verticalement dans une baie de carrosserie de véhicule ou de portière de carrosserie de véhicule et le coulissement de l'élément vitré mobile qui est permis par la rainure de coulissement est un coulissement vertical.

L'art antérieur connaît à ce titre la demande brevet français N° FR 3 002 882 et la demande brevet EP 2 614 977. Dans ces documents la pièce de couverture, appelée « enjoliveur » présente sur toute sa longueur un profil en T. La tête du T forme une semelle de couverture et le tronc de ce T est destiné à être introduit dans une rainure, unique, qui est ménagée dans la première partie du montant, la partie qui est directement moulée sur l'élément vitré, et qui est plus souple, c'est-à-dire dans le cordon profilé.

Une seconde partie, plus rigide, et constituant une pièce intermédiaire de renfort pour le renfort du cordon profilé, est intégrée au cordon profilé.

Pour que le tronc de la pièce de couverture reste dans la rainure de clippage, plusieurs agrafes métalliques sont prévues le long du tronc.

Ainsi, le clippage de la pièce de couverture dans le cordon profilé permet de finaliser la rainure de coulissement pour le coulissement de l'élément vitré mobile.

Cette solution est difficile à mettre en oeuvre industriellement.

Une première difficulté réside dans le fait que la première partie du montant, le cordon profilé, comporte une rainure relativement fine et relativement profonde ; une telle forme en négatif est difficile à réaliser avec précision lors du moulage du cordon profilé sur l'élément vitré fixe.

Une seconde difficulté réside dans le fait que, latéralement, la seconde partie de profilé, plus rigide, qui est intégrée au montant lors du moulage du cordon profilé est très proche de la rainure, complexifiant encore la réalisation de la rainure.Du fait de la complexité des moyens à mettre en œuvre pour réaliser la rainure de clippage dans le cordon profilé, le taux de rebut des vitrages pour non-conformité peut être relativement élevé.

L'art antérieur expose en outre des configurations conformes au préambule de la revendication 1 dans les demandes de brevet EP2463134, JP2007-276686 et EP983891.

La présente invention a pour but de remédier à des inconvénients de la technique antérieure en proposant un vitrage plus simple que celui de l'art antérieur et un procédé de fabrication de ce vitrage plus simple que celui de l'art antérieur.

Un but particulier de l'invention est de faciliter la mise en œuvre industrielle de la solution et de produire d'une manière très fiable, avec un très faible taux de rebut.

La présente invention repose ainsi sur une solution selon laquelle la pièce intermédiaire de renfort du cordon profilé est utilisée pour clipper la pièce de couverture et ce clippage est réalisé en prévoyant une pluralité de pattes pour la pièce de couverture et une pluralité de trous dans l'épaisseur de la pièce intermédiaire de renfort du cordon profilé pour l'accueil et le clippage de ces pattes.

Un avantage important de l'invention est constitué par le fait qu'il n'y a plus besoin de prévoir une rainure de clippage dans le cordon profilé.

Ce n'est plus directement le cordon profilé lui-même qui permet de fixer la pièce de couverture, mais c'est la pièce intermédiaire de renfort du cordon profilé, qui constitue ici une pièce intermédiaire de fixation, et qui a été fabriquée avant le moulage du cordon profilé sur l'élément vitré fixe (préfabriqué), qui permet de fixer la pièce de couverture qui va finaliser la rainure de coulissement pour le coulissement de l'élément vitré mobile.

Les trous de la pièce intermédiaire de renfort sont eux-aussi préfabriqués et sont fabriqués lors de la fabrication de la pièce intermédiaire de renfort mais il est plus facile de prévoir ces trous dans cette pièce intermédiaire de renfort que de prévoir une rainure dans un cordon profilé du fait que la pièce intermédiaire de renfort est plus rigide que le cordon profilé et qu'elle n'est pas fabriquée in-situ, sur l'élément vitré.

La présente invention se rapporte, dans son acception la plus large, à un vitrage selon la revendication 1. Les revendications dépendantes exposent des caractéristiques avantageuses.

Le vitrage selon l'invention comprend un élément vitré, fixe, et comprend en outre, le long d'un bord latéral dudit élément vitré, un montant qui s'étend plus loin latéralement que ledit bord latéral, ledit montant comportant une rainure de coulissement présentant en coupe transversale une forme de U, pour le coulissement d'un élément vitré mobile et comportant :
- d'une part un cordon profilé présentant une base qui est située contiguë à un chant dudit élément vitré et une aile intérieure qui s'étend sensiblement perpendiculairement à ladite base et à l'opposé dudit élément vitré, et
- ledit cordon profilé comportant une pièce intermédiaire de renfort présentant d'une part un corps qui est situé en vis-à-vis dudit chant de l'élément vitré avec ladite base intercalée entre ledit corps et ledit chant et d'autre part une branche intérieure qui s'étend sensiblement perpendiculairement audit corps et parallèlement à ladite aile intérieure,
- d'autre part une pièce de couverture comportant une semelle de couverture s'étendant sensiblement perpendiculairement à ladite base et plus à l'extérieur que ladite base,
et ladite pièce de couverture étant attachée mécaniquement audit montant pour réaliser ladite rainure de coulissement.

Ce vitrage est remarquable en ce que ladite pièce de couverture comporte une pluralité de pattes s'étendant perpendiculairement par rapport à ladite semelle de couverture, et ledit corps présente sur une tranche extérieure une pluralité de trous pour le clippage des pattes de la pièce de couverture.

Ainsi, lesdites pattes sont introduites dans lesdits trous et ladite pièce de couverture est attachée mécaniquement à ladite pièce intermédiaire de renfort, de préférence uniquement à cette pièce intermédiaire de renfort, pour permettre de former ladite rainure de coulissement.

Ledit corps de la pièce intermédiaire de renfort est situé exactement en vis-à-vis dudit chant de l'élément vitré ; en tant que tel, c'est un élément qui présente un forme sensiblement rectangulaire ou carrée et qui est orienté sensiblement parallèlement audit chant de l'élément vitré.

Ladite rainure de coulissement est ainsi constituée de ladite semelle de couverture, dudit corps et de ladite branche intérieure. Ladite pièce intermédiaire de renfort est de préférence constituée dudit corps et de ladite branche intérieure ; elle ne comporte pas de branche exétrieure qui serait plus à l'extérieure que ladite branche intérieure.

Le montant s'étend à la fois plus loin latéralement que ledit bord latéral de l'élément vitré fixe et plus bas que l'élément vitré fixe, afin de constituer un guidage de l'élément vitré mobile plus bas que l'élément vitré fixe.

Avec la base et l'aile intérieure, le cordon profilé présente, de préférence, dans une partie latérale contiguë au chant de l'élément vitré fixe qui s'éloigne de cet élément vitré fixe, en coupe transversale, sensiblement une forme de L, sans aile extérieure qui s'étendrait plus à l'extérieur qu'une face extérieure dudit élément vitré ; il ne présente pas en coupe transversale une forme en U dans sa partie pour le coulissement.

En revanche, dans sa partie contiguë à l'élément vitré fixe et en direction de cet élément vitré fixe, le cordon profilé présente de préférence, en coupe transversale une forme en U afin de permettre d'enchâsser l'élément vitré fixe, en étant en contact, en plus du chant, avec un bord intérieur et un bord extérieur de l'élément vitré.

Ladite aile intérieure s'étend de préférence plus à l'intérieur qu'une face intérieure dudit élément vitré.

Ladite base est, de préférence, présente entre ledit corps de la pièce intermédiaire de renfort et ledit chant de l'élément vitré fixe de telle sorte qu'il n'y a pas de matière de cordon profilé entre ledit corps et ladite rainure de coulissement.

Avec le corps et la branche intérieure, la pièce intermédiaire de renfort présente, de préférence, dans sans partie latérale contiguë au chant de l'élément vitré fixe, en coupe transversale, sensiblement une forme de L, sans branche extérieure qui s'étendrait plus à l'extérieur qu'une face extérieure dudit élément vitré ; elle ne présente pas en coupe transversale une forme en U dans sa partie pour le coulissement.

Ladite semelle de couverture de la pièce de couverture recouvre, de préférence, au moins :
- ladite base du cordon profilé,
- ledit corps de la pièce intermédiaire de renfort,
- en s'étendant plus loin, latéralement que ce corps.

En outre, de préférence, ladite semelle de couverture de la pièce de couverture recouvre une partie de cordon profilé qui est en contact avec un bord d'une face extérieure dudit élément vitré fixe.

Ladite pièce de couverture est attachée mécaniquement audit montant pour réaliser ladite rainure de coulissement ; elle est, de préférence, attachée uniquement mécaniquement, sans attache chimique (du type colle ou autre) audit montant, afin de faciliter le démontage du coulissement.

De préférence, les trous de la pièce intermédiaire de renfort qui sont présents sur la tranche extérieure du corps pour permettre d'introduire les pattes de clippage sont des trous borgnes. Ces trous sont de préférence droits mais une partie, voire tous, peuvent être courbes, éventuellement avec des courbures différentes. Dans ce cas, les pattes présentent des courbures similaires pour permettre de les introduire dans les trous.

Lesdites pattes s'étendant perpendiculairement par rapport à ladite semelle de couverture en direction de l'intérieur.

De préférence, au moins une, et de préférence chaque, patte est pleine ; elle n'est pas ajourée ; elle(s) présente(nt) ainsi une résistance mécanique plus élevée.

Ledit montant présent, de préférence, une épaisseur totale comprise entre 1,8 et 4,0 fois l'épaisseur de l'élément vitré fixe.

De préférence, ladite aile intérieure du cordon profilé comporte une réservation creuse pour l'accueil de ladite branche intérieure, la profondeur de ladite réservation creuse étant de préférence identique à l'épaisseur de ladite branche intérieure ; l'aile intérieure présente ainsi un retour, en direction de l'extérieur, afin d'augmenter la rigidité intérieure du montant.

Dans une variante, au moins une patte comporte une protubérance et au moins un trou comporte une fenêtre pour l'accueil de cette protubérance.

Dans une autre variante, éventuellement pour la même pièce de couverture, au moins une patte comporte à son extrémité libre un clip métallique comportant une languette flexible de telle sorte qu'à l'état libre, l'épaisseur du clip soit supérieure à la largeur et/ou la longueur d'un trou.

De préférence, au moins une patte, et de préférence encore chaque patte, présente une hauteur comprise entre 0,6 et 1,0 fois la hauteur dudit corps, voire entre 0,8 et 1,0 fois la hauteur dudit corps ; Ainsi, chaque patte est haute et le clippage est meilleur, tout en étant compact.

De préférence, ledit corps présente une épaisseur comprise entre 1,5 et 4,0 fois la largeur de ladite base, voire entre 1,8 et 2,2 fois la largeur de ladite base, afin de permettre une très bonne retenue des pattes, tout en étant compact.

Ledit corps présente, de préférence, une largeur comprise entre 3,0 et 8,0 mm.

La présente invention se rapporte aussi à un procédé de fabrication d'un vitrage suivant l'invention, ledit vitrage comprenant un élément vitré, fixe, et long d'un bord latéral dudit élément vitré un montant qui s'étend plus loin latéralement que ledit bord latéral, ledit montant comportant une rainure de coulissement présentant en coupe transversale une forme de U, pour le coulissement d'un élément vitré mobile.

Ce procédé est remarquable en ce que ladite pièce de couverture comporte une pluralité de pattes s'étendant perpendiculairement par rapport à ladite semelle de couverture et qui sont clippées chacune dans un trou débouchant sur une tranche extérieure dudit corps.

On décrira ci-après, à titre d'exemples non limitatifs, plusieurs formes d'exécution de la présente invention, en référence aux dessins annexés sur lequel :
- la figure 1 illustre une vue en perspective d'une portière de véhicule équipée d'un vitrage selon l'invention, le vitrage étant vu de l'extérieur ;
- la figure 2 est une vue en coupe du vitrage de la figure 1, selon AA' ;

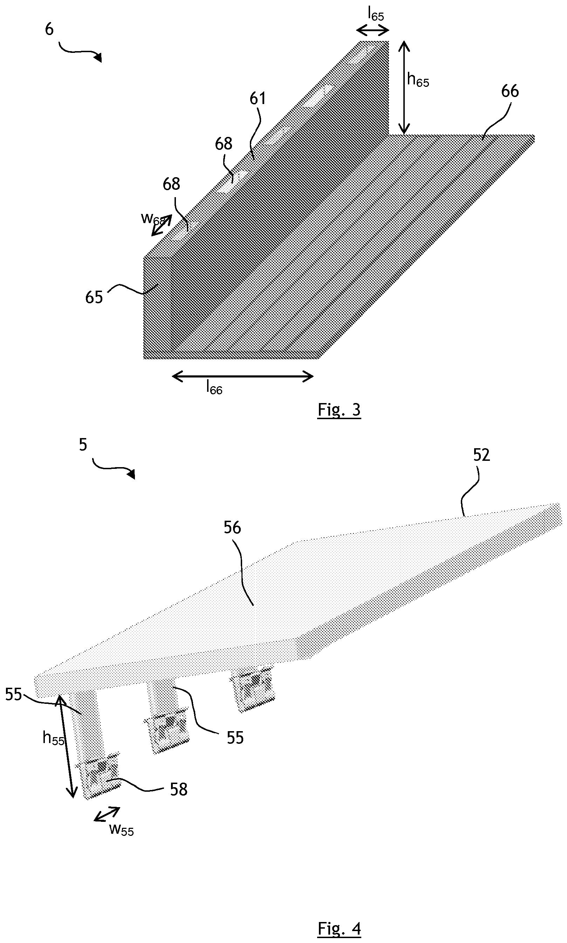

- la figure 3 est une vue en perspective d'une pièce intermédiaire de fixation ; et
- la figure 4 est une vue en perspective d'une pièce de couverture.

Dans ces figures, les proportions entre les différents éléments sont respectées sur chaque figure mais les éléments en arrière-plan ne sont en général pas représentés, afin de faciliter leur lecture.

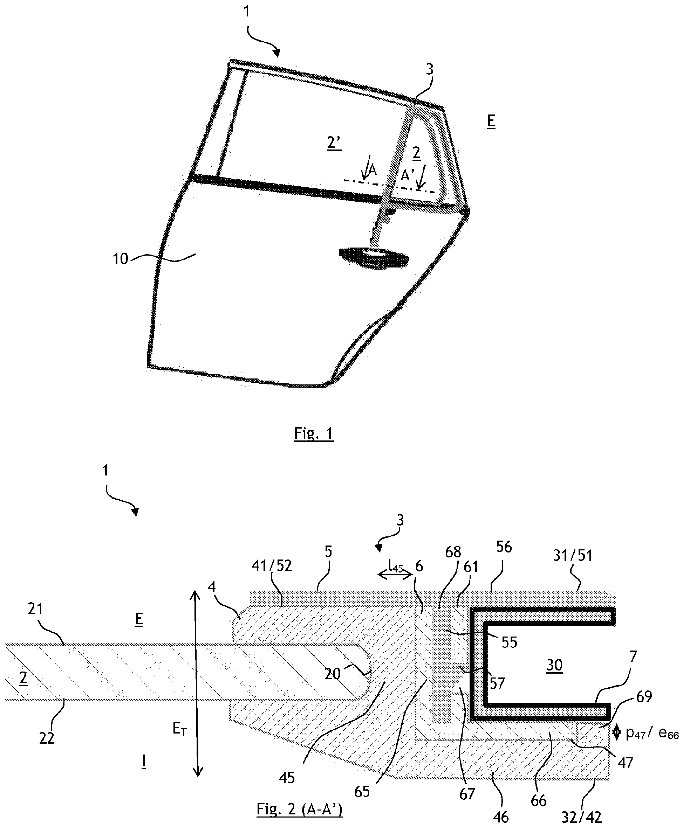

La présente invention se rapporte à un vitrage 1, et notamment un vitrage de véhicule tel que visible en figure 1. Ce vitrage comprend un élément vitré 2, fixe et comporte un montant 3 qui est situé le long d'un bord latéral de l'élément vitré fixe, ce montant s'étendant plus loin latéralement que le bord latéral.

Le montant comporte une rainure de coulissement 30 présentant en coupe transversale une forme de U, pour le coulissement d'un élément vitré mobile 2'.

Comme visible en figure 2, l'élément vitré mobile ne fait pas partie du vitrage 1.

Le vitrage 1 selon l'invention qui est illustré est un vitrage latéral arrière fixe d'une portière 10 arrière d'une automobile. Il comporte un élément vitré 2, fixe par rapport à cette portière, qui est muni d'une portion de joint (ou cordon) profilé 3 en un matériau polymère souple le long au moins d'un bord vertical avant de l'élément vitré 2 ; ici ; la portion de joint profilé 3 est périphérique : elle fait tout le tour du bord de l'élément vitré.

Le vitrage 1 réalise une séparation entre un espace intérieur I du véhicule et un espace extérieur E au véhicule. L'élément vitré 2 présente ainsi une face extérieure 21 destinée à être tournée vers l'espace extérieur E, une face intérieure 22 destinée à être tournée vers l'espace intérieur I, ainsi qu'un chant 20 périphérique, dessiné ici arrondi mais qui peut être droit.

L'élément vitré 2 peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Lorsque l'élément vitré est en matière organique, il a été fabriqué préalablement à la mise en oeuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en oeuvre de l'invention par fusion de matière minérale en une feuille plate, puis par découpe de cette feuille et éventuellement bombage et/ou trempe de cette feuille.

Sur les figures 1 et 2, l'élément vitré 2 est une vitre monolithique.

Le cordon profilé 4 présente ainsi une face extérieure 41 qui est destinée à être orientée vers l'extérieur E du véhicule, ainsi qu'une face intérieure 42 qui est destinée à être orientée vers l'intérieur I du véhicule.

Le matériau polymère constitutif du cordon profilé 4 peut être un thermoplastique (PVC, TPE, ...), un polyuréthanne ou encore un caoutchouc synthétique du type EPDM ou toute autre matière adéquate.

Le cordon profilé 4 est, de préférence, fabriqué par mise en oeuvre d'un procédé de fabrication appelé « encapsulation » car il comporte une étape de moulage de le cordon profilé 4 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage tout en réalisant entre eux une cavité cordon profilé pendant l'étape de moulage de ce cordon profilé.

Le cordon profilé 4 est, de préférence, disposé sur toute la périphérie de l'élément vitré 2 mais cette portion de joint profilé pourrait tout à fait n'être positionné que sur une partie de la périphérie de l'élément vitré 2.

Seul le cordon profilé 4 est fabriqué in-situ, sur l'élément vitré 2. Tous les autres éléments sont préfabriqués : fabriqués avant la fabrication du cordon profilé 4 sur l'élément vitré 2.

Le cordon profilé 4 présentant une base 45 qui est située contiguë au chant 20 de l'élément vitré 2 et une aile intérieure 46 qui s'étend sensiblement perpendiculairement à la base 45 et à l'opposé de l'élément vitré 2.

Le cordon profilé 4 comporte par ailleurs une pièce intermédiaire de renfort 6, en un matériau différent, présentant d'une part un corps 65 qui est situé en vis-à-vis du chant 20 de l'élément vitré 2 avec la base 45 intercalée entre le corps 65 et le chant 20 et d'autre part une branche intérieure 66 qui s'étend sensiblement perpendiculairement au corps 65 et parallèlement à l'aile intérieure 46.

En outre, le montant 3 comporte une pièce de couverture 5 comportant une semelle de couverture 56 s'étendant sensiblement perpendiculairement à la base 45 et plus à l'extérieur que la base 45 lorsque la pièce de couverture est attachée à la base.

Pour réaliser la rainure de coulissement 30, la pièce de couverture 5 est attachée mécaniquement au montant 3.

La rainure de coulissement 30 comporte de préférence un joint en rainure 7 pour guider l'élément vitré mobile 2' lors du coulissement.

Selon l'invention, comme visible en figure 2, vu en coupe transversale (c'est-à-dire horizontalement par rapport à la portière illustrée en figure 1), la pièce de couverture 5 comporte une pluralité de pattes 55 s'étendant perpendiculairement par rapport à ladite semelle de couverture 56 et le corps 65 de la pièce intermédiaire de renfort présente sur une tranche extérieure 61 une pluralité de trou 68 pour le clippage des pattes 55 de la pièce de couverture 6 dans le corps 65.

Ces trous 68 sont borgnes dans le sens où ils ne débouchent pas vers l'intérieur du véhicule.

La figure 2 illustre la position clippée : les pattes 55 sont clippées dans les trous 68 et la pièce de couverture 5 est ainsi tenue fermement par la pièce intermédiaire de renfort 6, qui est elle-même est tenue par le cordon profilé 4.

Lorsque le vitrage est observé en coupe transversale, la rainure de coulissement 30 est ainsi constituée de ladite semelle de couverture 56, du corps 65 dans lequel sont clippée les pattes 55 et de la branche intérieure 66.

Le matériau constituant la pièce de couverture peut être par exemple de l'ABS ou du PMMA.

Le matériau constituant la pièce intermédiaire de renfort présente peut être par exemple du polypropylène, et notamment du polypropylène chargé de fibres de verre

L'aile intérieure 46 s'étend plus à l'intérieur que la face intérieure 22 de l'élément vitré ; la branche intérieure 66 s'étend aussi plus à l'intérieur que la face intérieure 22 de l'élément vitré ; ainsi, la rainure de coulissement est située sensiblement en vis-à-vis de l'élément vitré fixe et l'élément vitré mobile coulisse dans cette rainure en étant sensiblement dans le prolongement de la face extérieure 21 de l'élément vitré fixe.

Le montant 3 présente une épaisseur totale E_{T} comprise entre 1,8 et 4,0 fois l'épaisseur de l'élément vitré 2, fixe. Cette épaisseur totale est comprise entre 6,3 et 20,0 mm et est ici, par exemple, de 12,0 mm pour un l'élément vitré 2 de 3,5 mm d'épaisseur.

De préférence, l'aile intérieure 46 du cordon profilé 4 comporte une réservation creuse 47 pour l'accueil de la branche intérieure 66, la profondeur p₄₇ de cette réservation creuse 47 étant de préférence identique à l'épaisseur e₆₆ de la branche intérieure 66 et est ici par exemple de 2 mm ; l'aile intérieure 46 présente ainsi un retour 69, en direction de l'extérieur, afin d'augmenter la rigidité intérieure du montant.

Deux solutions sont proposées pour favoriser le maintien des pattes 55 dans les trous 68 :
- une, ou plusieurs, voire chaque, patte(s) 55 comporte(nt) une protubérance 57 et chaque trou 68 correspondant comporte une fenêtre 67 s'ouvrant en direction de l'intérieur de la rainure de coulissement 30, pour l'accueil de cette protubérance, comme visible en figure 2, et/ou
- une, ou plusieurs, voire chaque, patte(s) 55 comporte(nt) à son extrémité libre un clip métallique 58 comportant une languette flexible de telle sorte qu'à l'état libre, l'épaisseur du clip soit supérieure à la largeur du trou 68.

Par ailleurs une, ou plusieurs, voire chaque, patte(s) 55 présente(nt) une hauteur h₅₅ comprise entre 0,6 et 1,0 fois la hauteur h₆₅ du corps 65, voire entre 0,8 et 1,0 fois la hauteur h₆₅ dudit corps 65. Ainsi, chaque patte est haute et le clippage est meilleur, tout en étant compact.

Le corps 65 présente une largeur l₆₅ comprise entre 1,5 et 4,0 fois la largeur l₄₅ de la base 45, voire entre 1,8 et 2,2 fois la largeur l₄₅ de la base 45.

Ledit corps 65 présente une largeur l₆₅ comprise entre 1,8 et 8,0 mm et ici par exemple de 2,0 mm ; une hauteur h₆₅ comprise entre 4,0 et 16,0 mm et ici par exemple de 6,0 mm.

L'aile intérieure 66 présente une largeur l₆₆ comprise entre 4,0 et 20,0 mm et ici par exemple de 10,0 mm.

Un, ou plusieurs, voire chaque, trou(s) 68 présente(nt) une largeur w₆₈ sensiblement identique à la largeur w₅₅ de la patte 55 qu'il accueille ; cette largeur peut être comprise entre 5,0 et 20,0 mm et est ici par exemple de 10,0 mm.

La pièce de couverture 5 est de préférence d'un seul tenant pour mieux protéger le cordon profilé 4. La pièce intermédiaire de renfort 6 est également de préférence d'un seul tenant car alors il n'y a qu'une seule pièce intermédiaire de renfort à prévoir lors de la fabrication du cordon profilé 4 sur l'élément vitré 2, fixe.

## Revendications

1. Vitrage (1) comprenant un élément vitré (2), fixe, et le long d'un bord latéral dudit élément vitré (2) un montant (3) qui s'étend plus loin latéralement que ledit bord latéral, ledit montant (3) comportant une rainure de coulissement (30) présentant en coupe transversale une forme de U, pour le coulissement d'un élément vitré mobile (2'), et comportant :
- d'une part un cordon profilé (4) présentant une base (45) qui est située contiguë à un chant (20) dudit élément vitré (2) et une aile intérieure (46) qui s'étend sensiblement perpendiculairement à ladite base et à l'opposé dudit élément vitré (2), et
- ledit cordon profilé (4) comportant une pièce intermédiaire de renfort (6) présentant d'une part un corps (65) qui est situé en vis-à-vis dudit chant (20) de l'élément vitré (2) avec ladite base (45) intercalée entre ledit corps (65) et ledit chant (20) et d'autre part une branche intérieure (66) qui s'étend sensiblement perpendiculairement audit corps (65) et parallèlement à ladite aile intérieure (46),
- d'autre part une pièce de couverture (5) comportant une semelle de couverture (56) s'étendant sensiblement perpendiculairement à ladite base (45) et plus à l'extérieur que ladite base (45),
et ladite pièce de couverture (5) étant attachée mécaniquement audit montant (3) pour réaliser ladite rainure de coulissement (30),
**caractérisé en ce que**
ladite pièce de couverture (5) comporte une pluralité de pattes (55) s'étendant perpendiculairement par rapport à ladite semelle de couverture (56),
et ledit corps (65) présente sur une tranche extérieure (61) une pluralité de trou (68) pour le clippage des pattes (55) de la pièce de couverture (5),
ladite rainure de coulissement (30) étant ainsi constituée de ladite semelle de couverture (56), dudit corps (65) et de ladite branche intérieure (66) et ledit cordon profilé (4) ne présentant pas en coupe transversale une forme en U dans sa partie pour le coulissement.

2. Vitrage (1) suivant la revendication 1, **caractérisé en ce que** ledit montant (3) présente une épaisseur totale (E_{T}) comprise entre 1,8 et 4,0 fois l'épaisseur de l'élément vitré (2) fixe.

3. Vitrage (1) suivant la revendication 1 ou 2, **caractérisé en ce que** au moins une patte (55) comporte une protubérance (57) et au moins un trou (68) comporte une fenêtre (67) pour l'accueil de cette protubérance.

4. Vitrage (1) suivant l'une quelconque des revendications 1 à 3, **caractérisé en ce que** au moins une patte (55) comporte à son extrémité libre un clip métallique (58) comportant une languette flexible de telle sorte qu'à l'état libre, l'épaisseur du clip soit supérieure à la largeur d'un trou (68).

5. Vitrage (1) suivant l'une quelconque des revendications 1 à 4, **caractérisé en ce que** au moins une patte (55), et de préférence chaque patte (55), présente une hauteur (h₅₅) comprise entre 0,6 et 1,0 fois la hauteur (h₆₅) dudit corps (65), voire entre 0,8 et 1,0 fois la hauteur (h₆₅) dudit corps (65).

6. Vitrage (1) suivant l'une quelconque des revendications 1 à 5, **caractérisé en ce que** ledit corps (65) présente une largeur (l₆₅) comprise entre 1,5 et 4,0 fois la largeur (l₄₅) de ladite base 45, voire entre 1,8 et 2,2 fois la largeur (l₄₅) de ladite base.

7. Vitrage (1) suivant l'une quelconque des revendications 1 à 6, **caractérisé en ce que** ledit corps (65) présente une largeur (l₆₅) comprise entre 3 et 8 mm.

8. Procédé de fabrication d'un vitrage (1) suivant l'une quelconque des revendications 1 à 7, ledit vitrage comprenant un élément vitré (2), fixe, et long d'un bord latéral dudit élément vitré (2) un montant (3) qui s'étend plus loin latéralement que ledit bord latéral, ledit montant (3) comportant une rainure de coulissement (30) présentant en coupe transversale une forme de U, pour le coulissement d'un élément vitré mobile (2'), **caractérisé en ce que** ladite pièce de couverture (5) comporte une pluralité de pattes (55) s'étendant perpendiculairement par rapport à ladite semelle de couverture (56) et qui sont clippées chacune dans un trou (68) débouchant sur une tranche extérieure (61) dudit corps (65).

## Patentansprüche

1. Verglasung (1), umfassend ein festes, verglastes Element (2) und entlang eines seitlichen Rands des verglasten Elements (2) eine Strebe (3), die sich seitlich weiter als der seitliche Rand erstreckt, wobei die Strebe (3) eine Gleitnut (30), die im Querschnitt eine U-Form vorweist, für das Gleiten eines bewegbaren verglasten Elements (2') aufweist, und die aufweist:
- einerseits einen Profilstrang (4), der eine Basis (45), die angrenzend an eine Kante (20) des verglasten Elements (2) gelegen ist, und einen Innenflügel (46) vorweist, der sich im Wesentlichen senkrecht zu der Basis und gegenüber des verglasten Elements (2) erstreckt, und
- wobei der Profilstrang (4) ein Verstärkungszwischenstück (6) aufweist, das einerseits einen Körper (65), der vis-à-vis der Kante (20) des verglasten Elements (2) gelegen ist, wobei die Basis (45) zwischen dem Körper (65) und der Kante (20) eingefügt ist, und andererseits einen Innenschenkel (66) vorweist der sich im Wesentlichen senkrecht zu dem Körper (65) und parallel zu dem Innenflügel (46) erstreckt,
- andererseits ein Abdeckungsstück (5), das eine Abdeckungssohle (56) aufweist, die sich im Wesentlichen senkrecht zu der Basis (45) und weiter nach außen als die Basis (45) erstreckt,
und wobei das Abdeckungsstück (5) zum Ausbilden der Gleitnut (30) an der Strebe (3) mechanisch angebracht ist,
**dadurch gekennzeichnet, dass**
das Abdeckungsstück (5) eine Vielzahl von Laschen (55) aufweist, die sich senkrecht relativ zu der Abdeckungssohle (56) erstrecken,
und der Körper (65) auf einem Außenabschnitt (61) eine Vielzahl von Löchern (68) für das Einklemmen von Laschen (55) des Abdeckungsstücks (5) vorweist,
wobei die Gleitnut (30) folglich aus der Abdeckungssohle (56), dem Körper (65) und dem Innenschenkel (66) besteht und der Profilstrang (4) in seinem Teil für das Gleiten im Querschnitt keine U-Form vorweist.

2. Verglasung (1) nach Anspruch 1, **dadurch gekennzeichnet, dass** die Strebe (3) eine Gesamtdicke (E_{T}) zwischen 1,8- und 4,0-mal der Dicke des festen verglasten Elements (2) vorweist.

3. Verglasung (1) nach Anspruch 1 oder 2, **dadurch gekennzeichnet, dass** mindestens eine Lasche (55) einen Vorsprung (57) aufweist und mindestens ein Loch (68) ein Schlitzloch (67) für die Aufnahme dieses Vorsprungs aufweist.

4. Verglasung (1) nach einem der Ansprüche 1 bis 3, **dadurch gekennzeichnet, dass** mindestens eine Lasche (55) an ihrem freien Ende eine Metallklammer (58) aufweist, die einen flexiblen Lappen derart aufweist, dass in dem freien Zustand die Dicke der Klammer größer als die Breite eines Lochs (68) ist.

5. Verglasung (1) nach einem der Ansprüche 1 bis 4, **dadurch gekennzeichnet, dass** mindestens eine Lasche (55), und vorzugsweise jede Lasche (55), eine Höhe (h₅₅) zwischen 0,6- und 1,0-mal der Höhe (h₆₅) des Körpers (65), sogar zwischen 0,8- und 1,0-mal der Höhe (h₆₅) des Körpers (65) vorweist.

6. Verglasung (1) nach einem der Ansprüche 1 bis 5, **dadurch gekennzeichnet, dass** der Körper (65) eine Breite (I₆₅) zwischen 1,5- und 4,0-mal der Breite (I₄₅) der Basis 45, sogar zwischen 1,8- bis 2,2-mal der Breite (I₄₅) der Basis vorweist.

7. Verglasung (1) nach einem der Ansprüche 1 bis 6, **dadurch gekennzeichnet, dass** der Körper (65) eine Breite (I₆₅) zwischen 3 und 8 mm vorweist.

8. Verfahren zum Herstellen einer Verglasung (1) nach einem der Ansprüche 1 bis 7, die Verglasung umfassend ein festes, verglastes Element (2) und entlang eines seitlichen Rands des verglasten Elements (2) eine Strebe (3), die sich seitlich weiter als der seitliche Rand erstreckt, wobei die Strebe (3) eine Gleitnut (30), die im Querschnitt eine U-Form vorweist, für das Gleiten eines bewegbaren verglasten Elements (2') aufweist, **dadurch gekennzeichnet, dass** das Abdeckungsstück (5) eine Vielzahl von Laschen (55) aufweist, die sich senkrecht relativ zu der Abdeckungssohle (56) erstrecken und die jeweils in einem Durchgangsloch (68) auf einem Außenabschnitt (61) des Körpers (65) eingeklemmt sind.

## Claims

1. Glazing (1) comprising a fixed glazed element (2) and, along one lateral rim of said glazed element (2), an upright (3) that extends laterally further out than said lateral rim, said upright (3) having a sliding slot (30), which is U-shaped in cross section, for a movable glazed element (2') to slide in, and having:
- for the one part, a profiled bead (4) having a base (45) which is situated contiguously with an edge (20) of said glazed element (2) and an interior flange (46) which extends substantially perpendicularly to said base and away from said glazed element (2), and
- said profiled bead (4) having an intermediate reinforcement part (6) having a body (65) situated opposite said edge (20) of the glazed element (2) with said base (45) interposed between said body (65) and said edge (20), and also having an interior arm (66) which extends substantially perpendicularly to said body (65) and parallel to said interior flange (46),
- and for the other part, a covering part (5) having a covering baseplate (56) extending substantially perpendicularly to said base (45) and further out than said base (45),
and said covering part (5) being mechanically attached to said upright (3) in order to realize said sliding slot (30),
**characterized in that**
said covering part (5) has a plurality of tabs (55) extending perpendicularly with respect to said covering baseplate (56),
and said body (65) has, on an outer edge face (61), a plurality of holes (68) for clip-fastening the tabs (55) of the covering part (5),
said sliding slot (30) being thus formed by said covering baseplate (56), said body (4) and said interior arm (66) and said body (4) not being U-shaped in cross section in its part for sliding.

2. The glazing (1) as claimed in claim 1, **characterized in that** said upright (3) has a total thickness (E_{T}) of between 1.8 and 4.0 times the thickness of the fixed glazed element (2).

3. The glazing (1) as claimed in claim 1 or 2, **characterized in that** at least one tab (55) has a protuberance (57) and at least one hole (68) has a window (67) for accommodating this protuberance.

4. The glazing (1) as claimed in any one of claims 1 to 3, **characterized in that** at least one tab (55) has at its free end a metal clip (58) having a flexible tongue such that, in the free state, the thickness of the clip is greater than the width of a hole (68).

5. The glazing (1) as claimed in any one of claims 1 to 4, **characterized in that** at least one tab (55), and preferably each tab (55), has a height (h₅₅) of between 0.6 and 1.0 times the height (h₆₅) of said body (65), preferably between 0.8 and 1.0 times the height (h₆₅) of said body (65) .

6. The glazing (1) as claimed in any one of claims 1 to 5, **characterized in that** said body (65) has a width (les) of between 1.5 and 4.0 times the width (l₄₅) of said base (45), or between 1.8 and 2.2 times the width (l₄₅) of said base.

7. The glazing (1) as claimed in any one of claims 1 to 6, **characterized in that** said body (65) has a width (les) of between 3 and 8 mm.

8. A method for manufacturing glazing (1) as claimed in any one of claims 1 to 7, said glazing comprising a fixed glazed element (2) and, along one lateral rim of said glazed element (2), an upright (3) that extends laterally further out than said lateral rim, said upright (3) having a sliding slot (30), which is U-shaped in cross section, for a movable glazed element (2') to slide in, **characterized in that** said covering part (5) has a plurality of tabs (55) which extend perpendicularly with respect to said covering baseplate (56) and are each clip-fastened in a hole (68) that opens onto an exterior edge face (61) of said body (65).
